(19) Europäisches Patentamt / European Patent Office / Office européen des brevets

(11) **EP 3 634 912 B1**

(12) **EUROPEAN PATENT SPECIFICATION**

(45) Date of publication and mention of the grant of the patent:
**01.06.2022 Bulletin 2022/22**

(21) Application number: **18735400.6**

(22) Date of filing: **05.06.2018**

(51) International Patent Classification (IPC):
**C02F 1/00** *(2006.01)*

(52) Cooperative Patent Classification (CPC):
**C02F 1/005**

(86) International application number:
**PCT/IB2018/054014**

(87) International publication number:
**WO 2018/224958 (13.12.2018 Gazette 2018/50)**

(54) **DEVICE FOR PROCESSING FLUIDS**

VORRICHTUNG ZUR VERARBEITUNG VON FLÜSSIGKEITEN

DISPOSITIF POUR TRAITER DES FLUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**TN**

(30) Priority: **07.06.2017 IT 201700061933**

(43) Date of publication of application:
**15.04.2020 Bulletin 2020/16**

(73) Proprietors:
• **Bortolin, Paolo**
  **31049 Valdobbiadene (IT)**
• **Bernardi, Albino**
  **31040 Segusino (IT)**
• **Lucchetta, Marco**
  **31025 Santa Lucia di Piave (TV) (IT)**

(72) Inventors:
• **Bortolin, Paolo**
  **31049 Valdobbiadene (IT)**
• **Bernardi, Albino**
  **31040 Segusino (IT)**

• **Lucchetta, Marco**
  **31025 Santa Lucia di Piave (TV) (IT)**

(74) Representative: **Modiano, Micaela Nadia et al**
  **Modiano & Partners**
  **Via Meravigli, 16**
  **20123 Milano (IT)**

(56) References cited:
  **DE-U1-202011 005 559     DE-U1-202011 005 559**
  **US-A- 5 934 877**

• **LOWER S: "Water Cluster Pseudoscience", INTERNET CITATION, 9 December 2002 (2002-12-09), XP002285545, Retrieved from the Internet:**
  **URL:http://www.chem1.com/CQ/clusqk.html**
  **[retrieved on 2004-06-23]**

Remarks:
  The file contains technical information submitted after the application was filed and not included in this specification

## Description

The present invention relates to a device for processing fluids, both liquid and aeriform, in the form of gaseous or mixed substances, in particular for food use such as water, carbonated water, sparkling wine or carbonated beer.

Nowadays the problem of treating fluids is very much felt, in particular of treating water for human consumption.

Since water is an essential element for life of organisms, its quality directly influences the biological development of all living beings.

Quality of water is therefore an essential aspect for human consumption, for plant and animal production, and in its daily uses, and also in its use for the production of foods and beverages.

In fact in plant and animal production it is known that high-quality clean water is directly correlated to the quantity of plants and animals produced and to the nutritional value thereof.

In the agriculture industry and in food production, the term fluids means for example milk, fruit juices, beer and wine.

Such fluids are also used as solvents for their ability to enter solid matrices, solubilize salts and other organic and inorganic elements.

In the production of beer, water is the main ingredient used and its chemical and microbiological qualities are essential during production and condition the organoleptic quality of the finished product.

In the production of microorganisms such as yeasts, bacteria, algae and micro-algae and the like, the development means is above all represented by water and its quality is essential to growth, development, and biomass produced.

Therefore various systems are known that are adapted to achieve the purification and increase in quality of water and of fluids in general.

Such conventional systems usually use mechanical filters or treatments that for example use ozone or chemical treatments. DE202011005559U1 discloses a device for improving the properties of water.

Such conventional solutions have many drawbacks however, such as structural complexity, high cost of installation and maintenance, or the use of chemical substances that may be found in the form of residues in the processed fluids.

The aim of the present invention is therefore to solve the above mentioned technical problems, eliminating the drawbacks in the cited known art and hence providing a device that makes it possible to improve the quality of water and of fluids, in particular for food use, such as liquids also in the form of gaseous or mixed substances such as water, carbonated water, sparkling wine or carbonated beer, which is structurally simple and which have low implementation and maintenance costs.

Within this aim, an object of the invention is to provide a device that in addition to the foregoing characteristics also adds the characteristic of not leaving any residue of any kind in the treated fluid.

Another object is to provide a device that makes it possible to decrease the oxidizability, the turbidity and the bacterial load of the water, thus improving the chemical and microbiological quality of the fluids proper.

Another object is to obtain a device that makes it possible to achieve the potentization of the water so that it becomes more vital, with smaller particles that can increase the solvent and absorption capacity.

Another object is to provide a device that enables the production of fluids for food use, liquid and semi-liquid, with high organoleptic and nutritive qualities and having better filterability.

Another object is to obtain a device that makes it possible to treat water so as to decrease the formation of limescale in the pipes, by reducing the size of the particles.

This aim and these and other objects which will become better apparent hereinafter are achieved by a device for processing fluids, as defined in claim 1 and characterized in particular in that it is constituted by an enclosure that contains inside it one or more ducts that have a curvature that substantially follows the curvature of a golden spiral or Fibonacci spiral and which are connected at their ends to a delivery inlet and an outlet for said fluids.

Further characteristics and advantages of the invention will become better apparent from the detailed description of a particular but not exclusive embodiment thereof, illustrated by way of non-limiting example in the accompanying drawings, wherein:

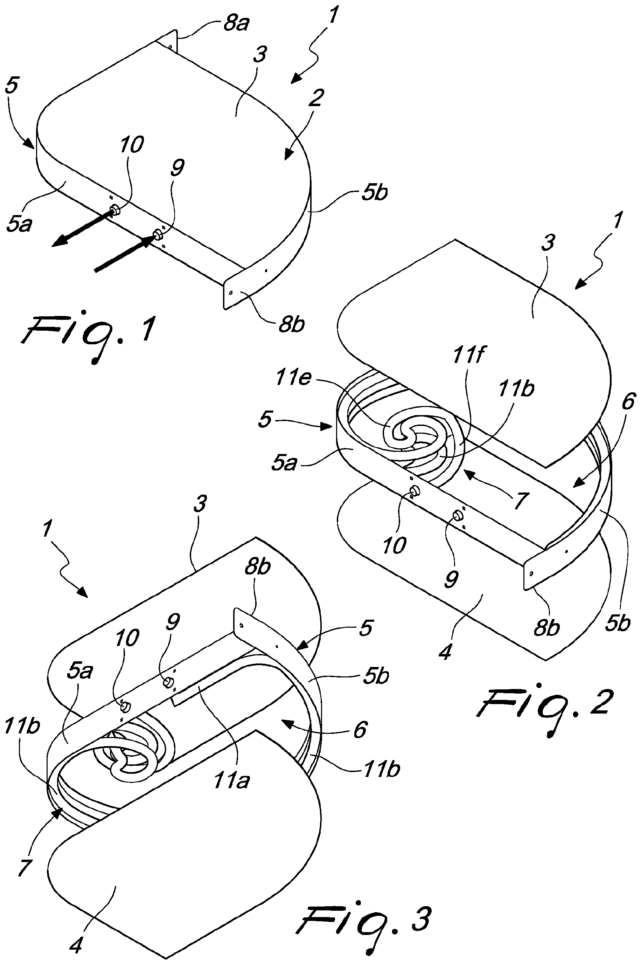

Figure 1 is a first perspective view of the assembled invention;
Figure 2 is a first exploded perspective view of the invention;
Figure 3 is a second exploded perspective view of the invention;

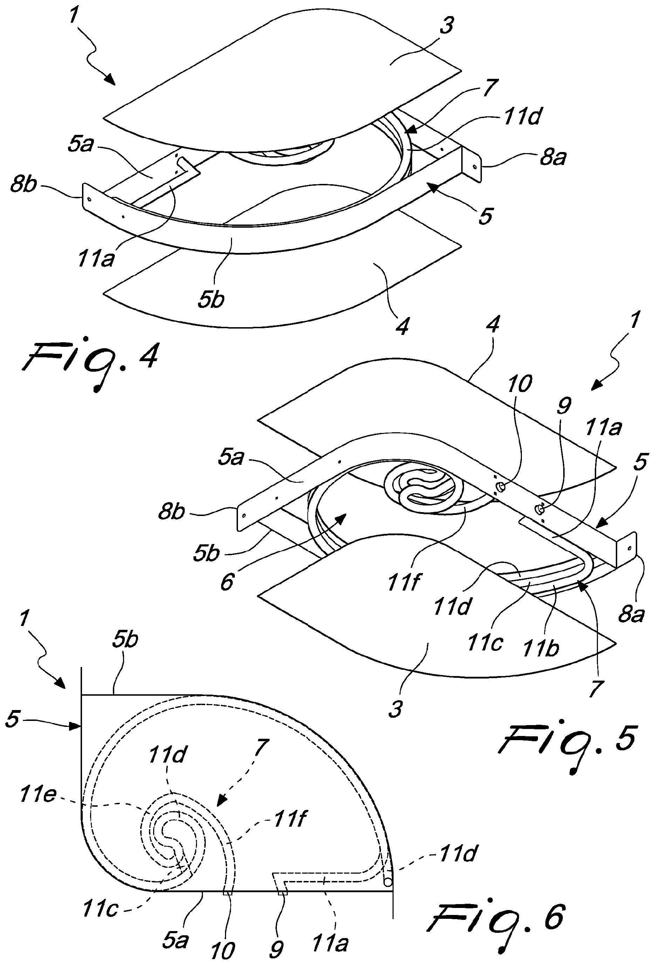

Figure 4 is a third exploded perspective view of the invention;
Figure 5 is a fourth exploded perspective view of the invention;
Figure 6 is a plan view of the invention without a lid;

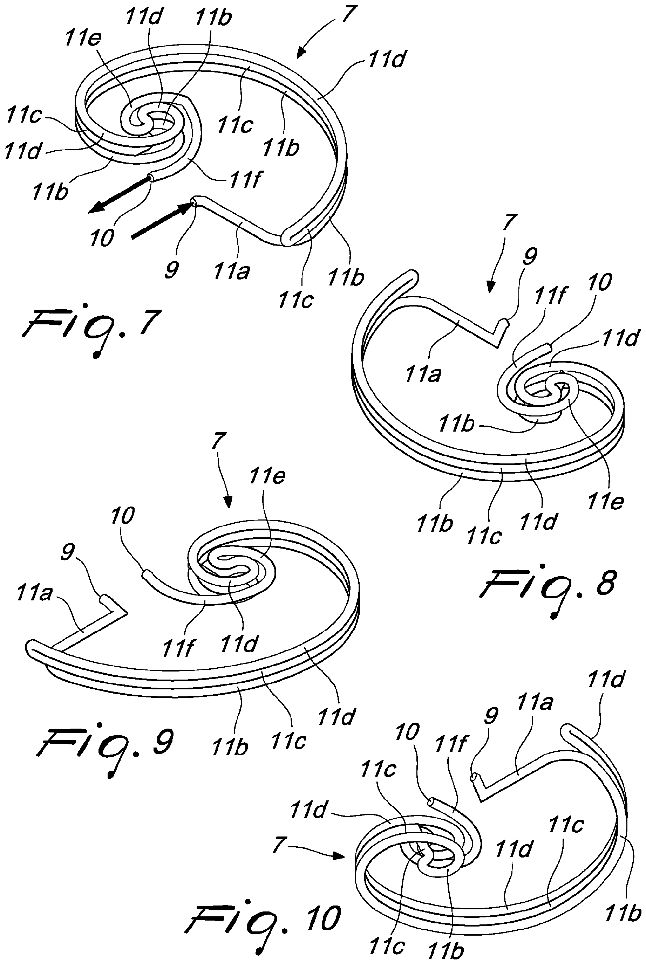

Figures 7 to 10 are various views of the internal ducts;
Figures 11 to 15 show a first variation in which the single duct is bent so as to obtain four turns that reproduce the figure of the complete golden spiral;
Figures 16 to 20 show a second variation in which the single duct is bent so as to obtain four turns of which three reproduce the figure of the complete golden spiral.

With reference to the figures, the reference numeral 1 indicates a device for processing fluids, such as, by way of example, water, milk, fruit juices, beer, wine, food beverages also in the form of gaseous or mixed substances such as water, carbonated water, sparkling wine or carbonated beer.

The device 1 is constituted by an enclosure 2, which may or may not be hermetic and made of various materials, such as preferably aluminum or steel, and which comprises a lid 3 and a bottom 4 between which a smooth, perforated or absent wall 5 is interposed.

Thus an internal cavity 6 is defined within which one or more ducts 7 are positioned which have a curvature that follows the curvature of a golden spiral.

Each one of the one or more ducts 7 is constituted by a pipe, flexible and bent or rigid and curved or molded and milled so as to follow one or more times the figure of the golden spiral or of the similar Fibonacci spiral.

In this particular embodiment a single duct 7 has been considered, bent so as to follow the figure of the golden spiral multiple times, preferably three times.

In geometry, the golden spiral is a logarithmic spiral with a growth factor "b" with a value equal to "θ" (theta), according to the following equation:

$$r = a \bullet e^{b\theta}$$

or

$$\theta = 1/b \bullet \ln(r/a)$$

where "e" is the base of natural logarithms and "a" is an arbitrarily positive real constant.

An approximation of the golden spiral, which is also included in the solution according to the present application, is given by the Fibonacci spiral.

The lid 3 and the bottom 4 preferably have a substantially rectangular shape with two opposite arc-like corners; the wall 5 has a rectangular band-like shape and follows the perimetric shape of the lid 3 and of the bottom 4 and is associated thereto so as to preferably render the inside of the device 1 and therefore the internal cavity 6 hermetic.

The lid 3 and the bottom 4 can be cambered internally and/or externally.

Advantageously the wall 5 has a substantially double-L shape so as to define a first L-shape 5a and a second L-shape 5b, in which the respective end of the shorter wing 8a, 8b of the L may or may not protrude slightly beyond the end of the longer wing and can have the desired shape structure.

At each one of the ends 8a, 8b there can be means for fastening to a wall, such as holes.

At the first L-shape 5a, preferably at the longer wing, there are two openings, advantageously mutually adjacent, for the connection of the delivery inlet 9 for the fluids, and of the outlet 10 for the fluids which are thus made to flow in the duct 7.

The positioning of the delivery inlet 9 and of the outlet 10 shown in the figures can also be mutually swapped.

The duct 7 is constituted preferably by a flexible pipe preferably made of inert steel that is resistant to high temperatures and pressures; such flexible pipe has a diameter comprised between 0.01 mm and 70,000 mm, preferably a diameter that can vary from 5 mm to 500 mm or even preferably from 10 mm to 80 mm.

As indicated, the duct 7 is bent so as to obtain three turns, two of which reproduce the figure of the complete golden spiral.

Thus, starting from the delivery inlet 9, a first portion 11a, which extends straight in the opposite direction from the outlet 10, followed by a second portion 11b, which extends on the same plane following the shape of the golden spiral, are defined.

The second portion 11b is followed by a third portion 11c which extends on a different (upper) plane, again following the form of the golden spiral until approximately the blending between the first portion 11a and the second portion 11b.

The blending between the second portion 11b and the third portion 11c constitutes a short portion that does not follow the shape of the golden spiral.

In substance, the second turn of the spiral (which corresponds to the third portion 11c) starting from below is not complete because it is blended by the first turn of the spiral so as to avoid the narrowest part of the spiral.

In this region the third portion 11c is followed by a fourth portion 11d which extends on an upper plane, following the shape of the golden spiral.

The fourth portion 11d is followed, substantially on a same plane, by a fifth portion 11e which describes only a part of the spiral until it blends with a sixth portion 1 If which blends with the underlying outlet 10.

It has been found that when fluids are made to flow inside the duct 7 they come out purified, by virtue of the curvature that follows the curvature of a golden spiral, with a vitalization and potentization of such fluids having occurred.

For example if water is used, it has been found that the water, once treated, shows a decrease in turbidity, a decrease in oxidizability, a decrease in the total bacterial load, a decrease in the insoluble salts with decreased limescale on the surfaces of and inside the apparatuses, greater clarification of the fluids and greater vitality measured using a BOVIS Biometer.

Such advantages have been proven by way of tests that have compared samples of water originating from several wells, as drawn, and samples of the same water after passing through the device 1, with measurements repeated over time, in particular:

- in order to determine the turbidity, the official APAT CNR IRSA 2110 Man 29 2003 method was used and a decrease in turbidity was found in the samples treated with the device 1 comprised between (60-90)%;

- in order to determine the oxidizability, the reference analytic method was used for the water intended for human consumption, published in the ISTISAN Report 2007/31 and a decrease in oxidizability was found in the samples treated with the device 1 of 50% on average;

- in order to determine the bacterial load, an analytical procedure was used which is adapted to verify the presence of microorganisms by counting the colonies of all microorganisms (bacteria, yeasts and funguses) grown in a mat of plate count agar (technique of inclusion in agar), analyzing known sample aliquots mixed with the substrate kept loose and subsequently allowed to solidify in Petri dishes and conducting the tests both at temperatures equal to 36°C to highlight mesophilic microorganisms, and at temperatures equal to 22°C to highlight psychrophilic microorganisms, and a decrease in microorganisms was found in the samples treated with the device 1 comprised between (50-90)%;

- in order to determine the size of the water particles, a Dynamic Light Scattering (DLS) analysis was carried out and an overall decrease in the size of the water particles was found in the samples treated with the device 1, with the disappearance of particles with dimensions between 1,000 nm and 10,000 nm and a greater concentration of particles smaller than 100 nm.

It has further been found through experimentation that water, after passing through the device 1, brought to a temperature lower than 0°C, forms a solid state that is generally more transparent than the ice formed using the same but untreated water; after passing through the device 1, the water modifies the shape structure of its hardness, showing a decrease in the particle size of salts, in particular of calcium carbonates.

Thus it has been found that the invention fully achieves the intended aim and objects, a device having been obtained that makes it possible to improve the characteristics of fluids such as for example well water and/or water from the water mains which, after passing through the ducts 7, is cleaner, clearer, and brighter, and the particles in it decrease in size resulting in a decrease in the formation of limescale in pipes and in the agricultural, industrial and domestic systems that use water.

The potentization carried out on the fluids by the present invention has further been found to result in an increase in the germination of seeds soaked with the treated water, an increase in vigor in plants, and better health in animals and humans.

Naturally the invention is susceptible of numerous modifications and variations, all of which are within the scope of the appended claims.

Thus the number of ducts 7 or their diameter or their arrangement or the number of reiterations of the shape of the golden spiral imparted to the various portions can vary according to specific requirements, such as the type of fluid used or the pressure of said fluid or the flow-rate of said fluid or the temperature of said fluid or in order to increase the power of the device.

The important thing is that in plan view the ducts 7 have a curvature that follows the curvature of a golden spiral or a Fibonacci spiral.

Thus the arrangement of the delivery inlet 9 and of the outlet 10 can also be obtained by having them on the same plane or on different planes.

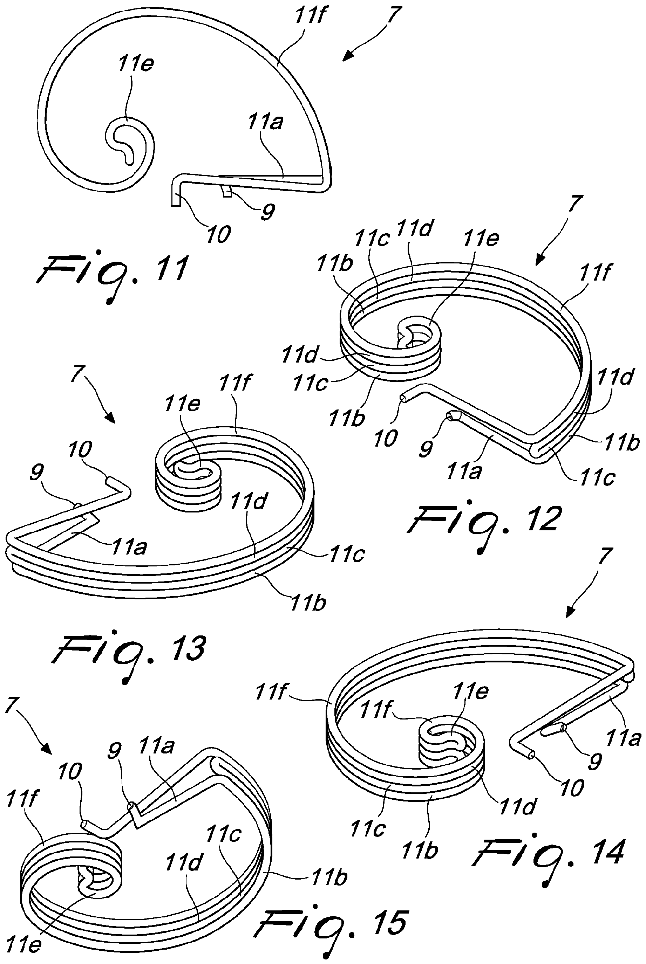

Figures 11 to 15 show a first variation in which the single duct 7 is bent so as to obtain four turns that reproduce the figure of the complete golden spiral.

In such solution the fifth portion 11e and the subsequent sixth portion 11f together follow a curvature that fully duplicates that of a golden spiral until the sixth portion 11f blends with the outlet 10.

In this solution the outlet 10 and the delivery inlet 9 lie on different planes.

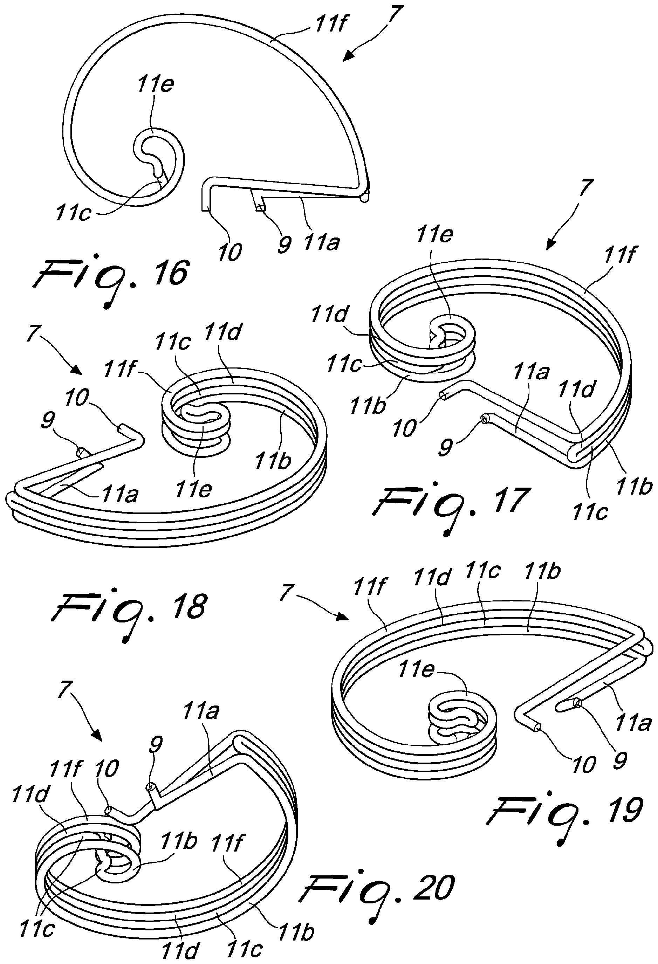

Figures 16 to 20 show a second variation in which the single duct 7 is bent so as to obtain four turns of which three reproduce the figure of the complete golden spiral.

Thus, starting from the delivery inlet 9, a first portion 11a, which extends in the opposite direction from the outlet 10, followed by a second portion 11b, which extends on the same plane following the shape of the golden spiral, are defined.

The second portion 11b is followed by a third portion 11c which extends on a different (upper) plane, again following the form of the golden spiral until approximately the blending between the first portion 11a and the second portion 11b.

The blending between the second portion 11b and the third portion 11c constitutes a short portion that does not follow the shape of the golden spiral.

In substance, the second turn of the spiral (which corresponds to the third portion 11c) starting from below is not complete because it is blended by the first turn 11b of the spiral so as to avoid the narrowest part of the spiral.

From the third portion 11c, the duct follows the shape of the golden spiral until it blends with the fourth portion 11d which will follow the spiral shape up to the center.

The fourth portion 11d, conveniently blended, is followed by the fifth portion 11e and the subsequent sixth portion 11f and together they follow a curvature that fully duplicates that of a golden spiral until the sixth portion 1 If blends with the outlet 10.

The outlet 10 and the delivery inlet 9 lie on the same plane, the delivery inlet 9 ending with a portion that is slightly inclined with respect to the corresponding portion of the outlet 10.

Naturally the materials used as well as the dimensions of the individual components of the invention may be more relevant according to specific requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device (1) for processing fluids, constituted by an enclosure (2) that contains inside it one or more ducts (7) which are connected at their ends to a delivery inlet (9) and an outlet (10) for said fluids, **characterized in that** said one or more ducts (7) have a curvature that follows the curvature of a golden spiral or a Fibonacci spiral and,
wherein each one of said one or more ducts (7) is constituted by a pipe, flexible and bent or rigid and curved or molded and milled so as to follow one or more times the figure of the golden spiral or of the Fibonacci spiral so as to define, starting from said delivery inlet (9), a first portion (11a), which extends straight in the opposite direction from said outlet (10), followed by a second portion (11b), which extends on the same plane following the shape of said golden spiral.

2. The device according to claim 1, **characterized in that** said enclosure (2), which may or may not be hermetic, comprises a lid (3) and a bottom (4), between which a smooth, perforated or absent wall (5) is interposed so as to define an internal cavity (6) inside which said one or more ducts (7) are arranged.

3. The device according to claim 2, **characterized in that** said lid (3) and bottom (4) have a substantially rectangular shape with two opposite arc-like corners, said wall (5) having a rectangular band-like shape and following the perimetric shape of said lid (3) and bottom (4).

4. The device according to claim 2, **characterized in that** said wall (5) has a double-L shape, so as to define a first L-shape (5a) and a second L-shape (5b), in which the respective end of the shorter wing (8a, 8b) may or may not protrude slightly beyond the end of the longer wing, at each one of said ends (8a, 8b) there being means for fastening to a wall, such as holes.

5. The device according to claim 4, **characterized in that** at said first L-shape (5a) there are, at the longer wing, two mutually adjacent openings for the connection of the delivery inlet (9) for said fluids, and of the outlet (10) for said fluids, which are thus made to flow in said one or more ducts (7).

6. The device according to one or more of the preceding claims, **characterized in that** said second portion (11b) is followed by a third portion (11c) which extends on an upper different plane, again following the shape of said golden spiral or Fibonacci spiral until blending occurs between said first portion (11a) and said second portion (11b), in this region said third portion (11c) being followed by a fourth portion (11d) which extends on an uppper plane, following the shape of said golden spiral or Fibonacci spiral.

7. The device according to claim 6, **characterized in that** said fourth portion (11d) is followed, on a same plane, by a fifth portion (11e) which extends only for part of said spiral until it blends with a sixth portion (11f) which blends with said underlying outlet (10).

8. The device according to claim 5, **characterized in that** said delivery inlet (9) and outlet (10) for said fluids can be mutually swapped and can lie on the same plane or on different planes.

9. The device according to claim 7, **characterized in that** said one or more ducts (7) are bent so as to obtain four turns which all reproduce the figure of the complete golden spiral, said fifth portion (11e) and the subsequent sixth portion (11f) together following a curvature that fully duplicates that of a golden spiral until said sixth portion (11f) blends with said outlet (10).

10. The device according to claim 1, **characterized in that** said one or more ducts (7) are bent so as to obtain four turns, three of which reproduce the figure of the golden spiral.

11. The device according to claim 1, **characterized in that** said one or more ducts (7) are bent so as to obtain three turns, of which two reproduce the figure of the golden spiral.

## Patentansprüche

1. Eine Vorrichtung (1) zur Verarbeitung von Fluiden, bestehend aus einem Gehäuse (2), das in seinem Inneren eine oder mehrere Leitungen (7) enthält, die an ihren Enden mit einem Abgabeeinlass (9) und einem Auslass (10) für die Fluide verbunden sind, **dadurch gekennzeichnet, dass** die eine oder mehreren Leitungen (7) eine Krümmung haben, welche der Krümmung einer goldenen Spirale oder einer Fibonacci-Spirale folgt, und
wobei jede der einen oder mehreren Leitungen (7) in einer Röhre besteht, flexibel und gebogen oder starr und gekrümmt oder geformt und gefräst, um einmal oder mehrmals der Form der golden Spirale oder der Fibonacci-Spirale zu folgen, um, ausgehend von dem Abgabeeinlass (9), einen ersten Abschnitt (11a) zu bestimmen, der sich gerade in die dem Auslass (10) entgegengesetzte Richtung erstreckt, gefolgt von einem zweiten Abschnitt (11b), der sich auf derselben Ebene erstreckt und dabei der Form der goldenen Spirale folgt.

2. Die Vorrichtung gemäß Anspruch 1, **dadurch gekennzeichnet, dass** das Gehäuse (2), das hermetisch sein kann oder nicht, einen Deckel (3) und einen Boden (4) umfasst, zwischen denen eine glatte, perforierte oder abwesende Wand (5) angeordnet ist, um einen Innenraum (6) zu bestimmen, innerhalb dessen die einen oder mehreren Leitungen (7) angeordnet sind.

3. Die Vorrichtung gemäß Anspruch 2, **dadurch gekennzeichnet, dass** der Deckel (3) und der Boden (4) eine im Wesentlichen rechteckige Form mit zwei gegenüberliegenden bogenförmigen Ecken haben, wobei die Wand (5) eine rechteckige ringähnliche Form hat und der perimetrischen Form des Deckels (3) und des Bodens (4) folgt.

4. Die Vorrichtung gemäß Anspruch 2, **dadurch gekennzeichnet, dass** die Wand (5) die Form eines doppelten Ls hat, um so eine erste L-Form (5a) und eine zweite L-Form (5b) zu bestimmen, wobei das jeweilige Ende des kürzeren Flügels (8a, 8b) etwas über das Ende des längeren Flügels hinausragen kann oder nicht, wobei sich an jedem der Enden (8a, 8b) Mittel zur Befestigung an einer Wand, wie zum Beispiel Löcher, befinden.

5. Die Vorrichtung gemäß Anspruch 4, **dadurch gekennzeichnet, dass** sich am längeren Flügel der ersten L-Form (5a) zwei benachbarte Öffnungen für den Anschluss des Abgabeeinlasses (9) für die Fluide und des Auslasses (10) für die Fluide befinden, die so in den einen oder mehreren Leitungen (7) zum Strömen gebracht werden.

6. Die Vorrichtung gemäß einem oder mehreren der obigen Ansprüche, **dadurch gekennzeichnet, dass** auf den zweiten Abschnitt (11b) ein dritter Abschnitt (11c) folgt, der sich auf einer oberen, anderen Ebene erstreckt und erneut der Form der goldenen Spirale oder Fibonacci-Spirale folgt, bis der erste Abschnitt (11a) und der zweite Abschnitt (11b) ineinander übergehen, wobei in diesem Bereich auf den dritten Abschnitt (11c) ein vierter Abschnitt (11d) folgt, der sich auf einer oberen Ebene erstreckt und dabei der Form der goldenen Spirale oder Fibonacci-Spirale folgt.

7. Die Vorrichtung gemäß Anspruch 6, **dadurch gekennzeichnet, dass** auf den vierten Abschnitt (11d) auf derselben Ebene ein fünfter Abschnitt (11e) folgt, der sich nur über einen Teil der Spirale erstreckt, bis er in einen sechsten Abschnitt (11f) übergeht, welcher in den darunter liegenden Auslass (10) übergeht.

8. Die Vorrichtung gemäß Anspruch 5, **dadurch gekennzeichnet, dass** der Abgabeeinlass (9) und der Auslass (10) für die Fluide vertauscht werden können und auf derselben Ebene oder auf verschiedenen Ebenen liegen können.

9. Die Vorrichtung gemäß Anspruch 7, **dadurch gekennzeichnet, dass** die einen oder mehreren Leitungen (7) gebogen sind, um vier Windungen zu bilden, die alle die Form der vollständigen goldenen Spirale reproduzieren, wobei der fünfte Abschnitt (11e) und der anschließende sechste Abschnitt (11f) zusammen einer Krümmung folgen, welche diejenige einer goldenen Spirale vollständig widergibt, bis der sechste Abschnitt (11f) in den Auslass (10) übergeht.

10. Die Vorrichtung gemäß Anspruch 1, **dadurch gekennzeichnet, dass** die eine oder mehreren Leitungen (7) gebogen sind, um vier Windungen zu bilden, von denen drei die Form der goldenen Spirale reproduzieren.

11. Die Vorrichtung gemäß Anspruch 1, **dadurch gekennzeichnet, dass** die eine oder mehreren Leitungen (7) gebogen sind, um drei Windungen zu bilden, von denen zwei die Form der goldenen Spirale reproduzieren.

## Revendications

1. Dispositif (1) pour traiter des fluides, constitué par une boîte (2) qui contient à l'intérieur un ou plusieurs conduits (7) qui sont reliés à leurs extrémités à une entrée de distribution (9) et une sortie (10) pour lesdits fluides, **caractérisé en ce que** lesdits un ou plusieurs conduits (7) ont une courbure qui suit la courbure d'une spirale d'or ou d'une spirale de Fibonacci, et dans lequel chacun desdits un ou plusieurs conduits (7) est constitué par un tuyau, souple et incurvé ou rigide et courbé ou moulé et fraisé de manière à suivre une ou plusieurs fois la forme de la spirale d'or ou de la spirale de Fibonacci afin de définir, en partant de ladite entrée de distribution (9), une première partie (11a), qui s'étend tout droit dans la direction opposée à ladite sortie (10), suivie d'une deuxième partie (11b) qui s'étend sur le même plan en suivant la forme de ladite spirale d'or.

2. Dispositif selon la revendication 1, **caractérisé en ce que** ladite boîte (2), qui peut être hermétique ou non, comprend un couvercle (3) et un fond (4), entre lesquels une paroi lisse, perforée ou absente (5) est intercalée afin de définir une cavité interne (6) à l'intérieur de laquelle sont placés lesdits un ou plusieurs conduits (7).

3. Dispositif selon la revendication 2, **caractérisé en ce que** ledit couvercle (3) et ledit fond (4) ont une forme substantiellement rectangulaire avec deux coins arqués opposés, ladite paroi (5) ayant une forme de bande rectangulaire et suivant la forme périphérique dudit couvercle (3) et dudit fond (4).

4. Dispositif selon la revendication 2, **caractérisé en ce que** ladite paroi (5) a une forme de double L, afin de définir une première forme de L (5a) et une deuxième forme de L (5b), dans lesquelles l'extrémité respective de l'aile courte (8a, 8b) peut ou non faire saillie légèrement au-delà de l'extrémité de l'aile longue, un moyen de fixation à une paroi, tel que des trous, étant prévu sur chacune desdites extrémités (8a, 8b).

5. Dispositif selon la revendication 4, **caractérisé en ce que**, au niveau de ladite première forme de L (5a), se trouvent sur l'aile longue deux ouvertures mutuellement adjacentes pour la connexion de l'entrée de distribution (9) pour lesdits fluides, et de la sortie (10) pour lesdits fluides, que l'on fait ainsi circuler dans lesdits un ou plusieurs conduits (7).

6. Dispositif selon l'une ou plusieurs des revendications précédentes, **caractérisé en ce que** ladite deuxième partie (11b) est suivie d'une troisième partie (11c) qui s'étend sur un plan supérieur différent, en suivant encore la forme de ladite spirale d'or ou de la spirale de Fibonacci jusqu'à ce qu'une réunion se produise entre ladite première partie (11a) et ladite deuxième partie (11b), dans cette région ladite troisième partie (11c) étant suivie d'une quatrième partie (11d) qui s'étend sur un plan supérieur, en suivant la forme de ladite spirale d'or ou de la spirale de Fibonacci.

7. Dispositif selon la revendication 6, **caractérisé en ce que** ladite quatrième partie (11d) est suivie, sur un même plan, d'une cinquième partie (11e) qui s'étend uniquement sur une portion de ladite spirale jusqu'à ce qu'elle rejoigne une sixième partie (11f) qui rejoint ladite sortie sous-jacente (10).

8. Dispositif selon la revendication 5, **caractérisé en ce que** ladite entrée de distribution (9) et ladite sortie (10) pour lesdits fluides peuvent être mutuellement échangées et peuvent se trouver sur le même plan ou sur des plans différents.

9. Dispositif selon la revendication 7, **caractérisé en ce que** lesdits un ou plusieurs conduits (7) sont incurvés de manière à obtenir quatre tours qui reproduisent tous la forme de la spirale d'or complète, ladite cinquième partie (11e) et la sixième partie consécutive (11f) suivant ensemble une courbure qui reproduit entièrement celle d'une spirale d'or jusqu'à ce que ladite sixième partie (11f) rejoigne ladite sortie (10).

10. Dispositif selon la revendication 1, **caractérisé en ce que** lesdits un ou plusieurs conduits (7) sont incurvés de manière à obtenir quatre tours, dont trois reproduisent la forme de la spirale d'or.

11. Dispositif selon la revendication 1, **caractérisé en ce que** lesdits un ou plusieurs conduits (7) sont incurvés de manière à obtenir trois tours, dont deux reproduisent la forme de la spirale d'or.

Fig. 1

Fig. 2

Fig. 3

**Fig.4**

**Fig.5**

**Fig.6**

Fig.7

Fig.8

Fig.9

Fig.10

Fig. 11

Fig. 12

Fig. 13

Fig. 14

Fig. 15

Fig. 16

Fig. 17

Fig. 18

Fig. 19

Fig. 20

**EP 3 634 912 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202011005559 U1